# EUROPÄISCHE PATENTSCHRIFT

(11) **EP 0 402 575 B1**
(45) Veröffentlichungstag und Bekanntmachung des Hinweises auf die Patenterteilung: **01.09.1993**
(21) Anmeldenummer: 90104803.3
(22) Anmeldetag: 14.03.1990
(51) Int. Cl.: G01M 1/02

(54) **Verfahren und Vorrichtung zum Eingeben von Kenngrössen eines auszuwuchtenden Rotors, beispielsweise Fahrzeugrades, in eine Auswerteeinrichtung einer Auswuchtmaschine**
Procedure and device for feeding characteristics of a rotor to be balanced, for example a vehicle wheel, in the computing part of a balancing machine
Procédé et dispositif d'introduction des caractéristiques d'un rotor à équilibrer, par exemple d'une roue de véhicule, dans la partie de calculation d'une machine d'équilibrage

(30) Priorität: 14.06.1989 DE 3919449
(43) Veröffentlichungstag der Anmeldung: 19.12.1990
(73) Patentinhaber: HOFMANN WERKSTATT-TECHNIK GMBH, D-64319 Pfungstadt (DE)
(72) Erfinder: Rothamel, Karl, D-6100 Darmstadt (DE); Vollmari, Stefan, Dipl.-Ing., D-5419 Dierdorf 2 (DE)
(74) Vertreter: Nöth, Heinz, Dipl.-Phys.

(56) Entgegenhaltungen:
- DE-A- 3 101 843
- DE-A- 3 431 607
- FR-A- 2 400 697

## Beschreibung

Die Erfindung betrifft ein Verfahren und eine Vorrichtung zum Eingeben von Kenngrößen eines auszuwuchtenden Rotors, beispielsweise Fahrzeugrades, in eine Auswerteeinrichtung einer Auswuchtmaschine, bei der der auszuwuchtende Rotor auf eine Hauptwelle aufgespannt wird und die jeweiligen Drehwinkellagen der Hauptwelle mit Hilfe eines Winkelgebers in Winkelschritten überwacht und wiedergegeben werden.

Insbesondere beim Auswuchten von Kraftfahrzeugreifen im Werkstattbereich ist es bekannt (z. B. DE-OS 27 37 524), Raddaten, wie die Felgenbreite und den Felgendurchmesser sowie den Abstand eines Felgenhorns bzw. des Abstandes der Ebenen, in welchen die Ausgleichsgewichte an den Felgen zu befestigen sind, von einem stationären Maschinenteil in die Auswerteelektronik der Auswuchtmaschine einzugeben. Diese Angaben können in metrischen Abmessungen, z. B. Millimeter, oder auch in Zollwerten eingegeben werden. Diese Werte sind erforderlich, um die Lage der entsprechenden Ausgleichsebenen, in denen die Ausgleichsgewichte am Rad für den Unwuchtausgleich angebracht werden, im Rahmenrechner der Auswerteeinrichtung bzw. bei digitaler Auswertung im digitalen Prozessor entsprechend zu berücksichtigen.

In bekannter Weise erfolgt die Eingabe manuell über ein Tastenfeld. Auch ist es möglich, diese Angaben mit Hilfe von Potentiometern mit entsprechenden Skalen einzugeben.

Aufgabe der Erfindung ist es, den apparativen Aufwand, der für das Eingeben der Raddaten bzw. Daten des auszwuchtenden Rotors erforderlich ist, zu verringern.

Diese Aufgabe wird erfindungsgemäß dadurch gelöst, daß für das Eingeben der Kenngröße des auszuwuchtenden Rotors die Hauptwelle gedreht wird und das bei der Drehung der Hauptwelle vom Winkelgeber abgegebene Signal zur Änderung des jeweiligen Kenngrößenwertes, der angezeigt wird, verwendet wird, und daß die Hauptwelle so lange verdreht wird, bis der gewünschte Kenngrößenwert angezeigt wird. Dieser angezeigte Kenngrößenwert wird der Auswerteeinrichtung, insbesondere einem Digitalprozessor, wenn die Auswerteeinrichtung digital arbeitet, eingegeben und bei der Auswertung der Unwuchtmeßwerte berücksichtigt. Auf diese Weise können nacheinander mehrere Kenngrößen eingeben werden. Es kann sich hier beispielsweise im Fall eines Kraftfahrzeugrades um den Felgendurchmesser, die Felgenbreite und den Abstand der Felge von einem stationären Maschinenteil handeln.

In vorteilhafter Weise können durch die Erfindung eine Vielzahl von Tasten bzw. ein Tastenfeld, mit dem die entsprechenden metrischen Werte oder Zollwerte der Raddaten eingegeben werden, eingespart werden. Bei der Erfindung läßt sich in vorteilhafter Weise der mit der Hauptwelle gekoppelte Winkelgeber, der während des Unwuchtmeßlaufs die jeweilige Winkellage der Hauptwelle und/oder auch die Drehzahl der Hauptwelle erfaßt, für die Eingabe der Kenngrößen des auszuwuchtenden Rotors, insbesondere Kraftfahrzeugrades, ausnützen. Der Winkelgeber kann bevorzugt in bekannter Weise als Inkrementalgeber ausgebildet sein. Es kann aber auch ein Absolutwertgeber oder ein Drehmelder mit nachgeschaltetem Synchro/Digital-Umsetzer verwendet werden.

Die eingangs genannte Vorrichtung ist erfindungsgemäß derart ausgestaltet, daß an den Winkelgeber eine Umschalteinrichtung angeschlossen ist, welche den Ausgang des Winkelgebers wahlweise an eine Drehwinkelauswerteeinrichtung während des Unwuchtmeßlaufs und eine Kenngrößenauswerteeinrichtung während der Kenngrößeneingabe anschließt, und daß die Kenngrößenauswerteeinrichtung eine auf die jeweilige Kenngröße einstellbare Zählereinrichtung, die über die Umschalteinrichtung an den Ausgang des Winkelgebers anschließbar ist, sowie eine mit der Zählereinrichtung verbundene, insbesondere auf Digitalsignale ansprechende Kenngrößenanzeigeeinrichtung aufweist.

Die Kenngrößenanzeigeeinrichtung kann in vorteilhafter Weise in die Anzeigeeinrichtung, welche zur Wiedergabe der gemessenen Unwuchtwerte dient, integriert sein. Es kann sich hier beispielsweise um dreistellige 7-Segmentanzeigevorrichtungen handeln, mit denen während der Eingabe der Kenngrößen die Kenngrößenwerte angegeben werden. Mit der gleichen Anzeigevorrichtung können nach Durchführung des Unwuchtmeßlaufs die Unwuchtmeßwerte und hier insbesondere die Unwuchtgrößen wiedergegeben werden.

Beim Einstellen der Kenngrößenwerte können in vorteilhafter Weise vorab Standardkenngrößenwerte, die bei den auszuwuchtenden Rotoren, insbesondere Kraftfahrzeugrädern, häufig vorkommen, angegeben sein. Beispielsweise kann es sich hier um für Radfelgen häufig vorkommende Werte von 5,5 Zoll für die Felgenbreite und 14 Zoll für den Felgendurchmesser handeln. Falls hiervon abweichende Kraftfahrzeugräder gemessen werden, können die Kenngrößenwerte hierfür, ausgehend von den eingegebenen Standardwerten, entsprechend geändert werden. Durch Abtasten der Drehrichtung der Hauptwelle und entsprechende Ansteuerung des vorzugsweise als Vorwärts-Rück wärtszähler ausgebildeten Zähleinrichtung lassen sich die vorab eingegebenen Standardwerte auf die gewünschten Kenngrößenwerte erhöhen oder vermindern. Wenn der gewünschte Kenngrößenwert erreicht ist, wird der Drehvorgang beendet.

Die Kenngrößenwerteeingabe läßt sich so gestalten, daß ein unbeabsichtiges Verändern der Eingabewerte bei bereits in Drehbewegung befindlicher Hauptwelle vermieden wird. Hierzu kann ein Zustandsbit abgefragt werden, das anzeigt, ob die Hauptwelle sich bewegt oder nicht. Beispielsweise durch Drücken einer Taste läßt sich der momentan gültige Wert der eingegebenen Kenngröße zur Anzeige bringen. Durch das Zustandsbit, welches anzeigt, ob die Hauptwelle beim Drücken der Taste bereits in Bewegung war, läßt sich ein unbeabsichtigtes Verändern des momentan gültigen Kenngrößenanzeigewertes verhindern. War die Hauptwelle beim Drücken der Taste bereits in Bewegung, wird der Zählerstand vorerst nicht verändert. Erst nachdem die Hauptwelle für kurze Zeit ohne Bewegung war, wird der Zähler freigegeben. Es kann dann bei gedrückter Taste, d. h. bei freigegebenem Zähler, die Hauptwelle zur Einstellung des gewünschten Kenngrößenwertes in die entsprechende Richtung gedreht werden.

Beim Eingeben von Kenngrößen für auszuwuchtende Kraftfahrzeugräder können die Kenngrößenwerte in 0,5 Zoll- oder Millimeterschritten für die Zunahme oder Abnahme der Anzeigewerte für die Kenngrößen verändert werden.

Die Inkremente und Schrittweiten sowie die Anfangs- und Endwerte der Zählereinrichtung, insbesondere der Vorwärts-Rückwärts-Zählereinrichtung können leicht an die einzugebenden Kenngrößen angepaßt werden.

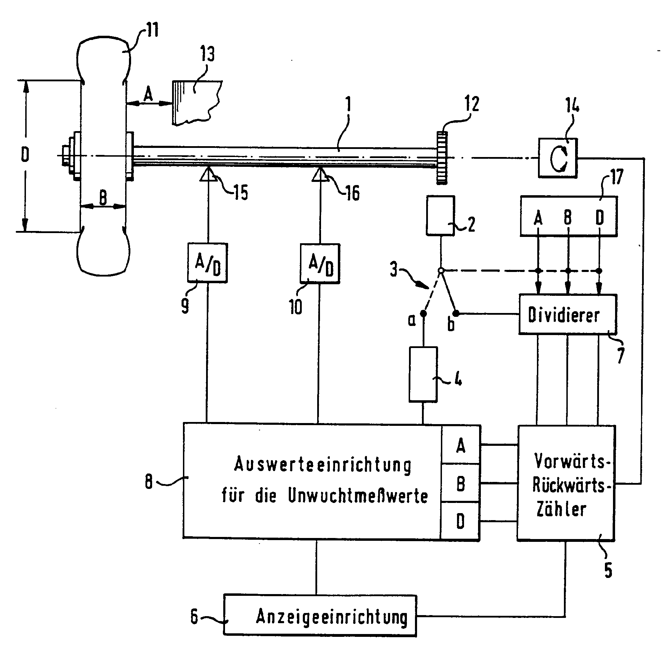

Anhand der beigefügten Figur, in welcher schematisch in Blockbilddarstellung ein Ausführungsbeispiel der Erfindung dargestellt ist, wird die Erfindung noch näher erläutert.

Das dargestellte Ausführungsbeispiel ist in eine im einzelnen nicht dargestellte Auswuchtmaschine eingebaut. Von dieser Auswuchtmaschine sind nur die im Zusammenhang mit der Erfindung notwendigen Bauteile gezeigt. Es handelt sich hier um die Hauptwelle 1 der Auswuchtmaschine, auf welche ein auszuwuchtender Rotor, welcher beim Ausführungsbeispiel ein Kraftfahrzeugrad 11 ist, für den Unwuchtmeßlauf aufgespannt werden kann. Meßwertaufnehmer 15 und 16 ermitteln während des Unwuchtmeßlaufs in bekannter Weise für zwei Ausgleichsebenen, in denen Ausgleichsgewichte am Kraftfahrzeugrad 11 für den Unwuchtausgleich vorzusehen sind, Unwuchtgrößen. Die von den Meßwertaufnehmern 15, 16 abgegebenen Signale werden in bekannter Weise über Analog-Digitalumsetzer 9 und 10 einer Auswerteeinrichtung 8 für die Unwuchtmeßwerte weitergegeben.

Zur Erfassung der jeweiligen Drehwinkellage der Hauptwelle 1 und auch zur Erfassung der Drehzahl der Hauptwelle 1 während des Unwuchtmeßlaufs ist ein z. B. als Inkrementalgeber 2 ausgebildeter Winkelgeber vorgesehen. Dieser tastet eine mitrotierende Winkelgeberscheibe 12, die mit Markierungen versehen ist, ab. Der Inkrementalgeber 2 und die Winkelgeberscheibe 12 bilden ein Inkrementalgebersystem für die jeweiligen Winkellagen der Hauptwelle 1, welches so ausgebildet sein kann, daß es in fortlaufenden Drehwinkelschritten der Hauptwelle 1 entsprechende Impulse liefert. Diese werden über eine Umschalteinrichtung 3, welche während des Unwuchtmeßlaufs eine Schaltstellung a einnimmt, einer Drehwinkelauswerteeinrichtung 4 zugeleitet.

Diese Drehwinkelauswerteeinrichtung 4 kann auch entsprechende Informationen über die Drehzahl der Hauptwelle 1 an die Auswerteeinrichtung 8 weitergeben. Wie schon erwähnt, kann als Drehwinkelgebersystem auch ein Absolutwertgeber oder Drehmelder mit nachgeschalteter Analog-Digitalumsetzung vorgesehen sein.

Nach Beendigung des Unwuchtmeßlaufs werden an einer Anzeigeeinrichtung 6 die ermittelten Unwuchten nach Größe und Winkellage angezeigt, und in Abhängigkeit hiervon kann dann der Unwuchtausgleich am Kraftfahrzeugrad 11 vorgenommen werden.

Das oben beschriebene Unwuchtmeßsystem ist bekannt und geeignete Meßsysteme sind beispielsweise in Hofmann News 7 (963211212/77) und Hofmann News 5 (09.85D) beschrieben.

Das in der Figur schematisch dargestellte Ausführungsbeispiel ist so ausgebildet, daß das die Drehwinkellage und/oder Drehzahl der Hauptwelle 1 überwachende Inkrementalgebersystem, bestehend aus der mitrotierenden Winkelgeberscheibe 12 und dem Inkrementalgeber 2, für die Eingabe der Kenngrößenwerte ausgenützt wird. Hierzu wird die Umschalteinrichtung 3 in eine Schalterstellung b gebracht. In dieser Schalterstellung ist eine als Vorwärts-Rückwärtszähler 5 ausgebildete Zähleinrichtung über einen Dividierer 7 mit dem Inkrementalgeber 2 verbunden. Durch den Dividierer 7 können die für die jeweiligen Kenngrößen geeigneten Schrittweiten, beispielsweise für den Felgendurchmesser und die Felgenbreite 0,5 Zoll- oder Millimeterschritte, eingestellt werden. Auf diese Weise wird gewährleistet, daß das während der Drehung der Hauptwelle 1 vom Inkrementgeber abgegebene Signal für die jeweils einzugebenden Kenngrößenwerte dem Vorwärts-Rückwärtszähler in aufbereiteter Form zugeführt wird. Hierbei bestimmt der als Vorteiler wirkende Dividierer 7 die Anzahl der Impulse des Inkrementalgebers 2, welche einen Zählschritt des Vorwärts-Rückwärtszählers 5 auslösen. Der jeweilige im Zähler 5 vorhandene Kenngrößenwert wird von der Anzeigeeinrichtung 6 angezeigt. Es kann sich hier um die gleiche Anzeigeeinrichtung handeln, wie sie bei der Anzeige der gemessenen Unwuchtwerte verwendet wird. In bevorzugter Weise ist die Anzeigeeinrichtung als dreistellige 7-Segmentanzeige ausgebildet, wie sie auch für die Unwuchtanzeige gebräuchlich ist. Damit die vom Inkrementalgeber 2 über den Dividierer 7 dem Zähler 5 zugelieferten Impulse drehrichtungsabhängig erfaßt werden können, ist ferner eine Abtasteinrichtung 14 vorgesehen, welche die Drehrichtung der Hauptwelle 1 abtastet und den Zähler 5 entsprechend ansteuert, damit der in Abhängigkeit von der Drehrichtung der Hauptwelle 1 vorhandene Kenngrößenwert erhöht oder verringert wird. Sobald die Anzeigeeinrichtung 6 den gewünschten Kenngrößenwert für die jeweils einzugebende Kenngröße A (Abstand der Felge von einem stationären Maschinenteil 13), B (Breite der Felge) und D Durchmesser der Felge) anzeigt, wird die Drehung der Hauptwelle 1 angehalten. Der Vorwärts-Rückwärtszähler 5 wird gesperrt, was beispielsweise durch Loslassen einer bei der Kenngrößeneingabe gedrückten Taste 17 erfolgen kann. Der eingestellte Zählerstand wird dann von einem entsprechenden Speicherbereich, insbesondere Register, der Auswerteeinrichtung 8, welche in herkömmlicher Weise als Digitalprozessor ausgebildet sein kann, als Eingabewert für die entsprechende Kenngröße A, B, D übernommen und bei der Auswertung der von den Meßwertgebern 15 und 16 gelieferten Unwuchtmeßwerte berücksichtigt.

Um die Auswuchtmaschine auf das Eingeben der Kenngrößen umzustellen, kann die Taste 17 vorgesehen sein, die beim Betätigen zunächst die Anzeige des momentan gültigen Kenngrößenwertes veranlaßt. Um ein unbeabsichtigtes Verändern des Wertes zu verhindern, wird ein Zustandsbit abgefragt, das anzeigt, ob die Hauptwelle beim Drücken der Taste in Bewegung war oder nicht. War die Hauptwelle beim Drücken der Taste noch in Bewegung, wird der Zählerstand zunächst nicht verändert. Erst nachdem die Hauptwelle für eine kurze Zeit ohne Bewegung war, wird der Zähler freigegeben. Dies kann beispielsweise durch die Abtasteinrichtung 14 erfolgen, welche auch die Drehrichtung der Hauptwelle 1 beim Eingeben dem Vorwärts-Rückwärtszähler 5 angibt. Das Eingeben der Kenngrößenwerte erfolgt nun bei gedrückter Taste 17 und durch Drehen der Hauptwelle 1. Wie schon erläutert, wird dann der vorhandene Kenngrößenwert in Abhängigkeit von der Drehrichtung der Hauptwelle 1 entsprechend erhöht oder verringert, bis an der Anzeigeeinrichtung 6 der gewünschte Kenngrößenwert eingestellt ist.

Um gegebenenfalls für unterschiedliche Kenngrößen die Anzahl der vom Inkrementalgeber 2 gelieferten Impulse für einen jeweiligen Zählschritt des Zählers 5 ändern zu können, ist es möglich, entsprechende Tasten vorzusehen, durch die auch die Umschaltung der Umschalteinrichtung 3 zwischen den beiden Schaltstellungen a und b durchgeführt wird. Diese Umschaltung kann jedoch auch durch die schon erwähnte Betätigungstaste 17 erfolgen. Auch ist es möglich, die drei angesprochenen Tasten durch die eine Taste 17 zu ersetzen, wobei durch die Reihenfolge der Betätigung der Taste 17 auch die entsprechende einzugebende Kenngröße der Auswerteeinrichrung 8 angegeben wird, damit die Kenngrößenwerte an den richtigen Plätzen in der Auswerteeinrichtung 8 abgelegt werden.

Soll der Zusammenhang zwischen dem Drehwinkel der Hauptwelle 1 und dem Anzeigewert an der Anzeigeeinrichtung 6 unlinear verlaufen, z. B. beim Aufruf von Sonder- und Testfunktionen, kann der im Zähler 5 vorhandene Zählerwert als Zeiger auf einer Tabelle verwendet werden. Der dort abgelegte Wert wird dann zur Anzeige gebracht.

Es ist auch möglich, den Vorwärts-Rückwärtszähler 5 als entsprechend ausgebildeten Programmteil in die Auswerteeinrichtung 8 zu integrieren.

## Patentansprüche

1. Verfahren zum Eingeben von Kenngrößen eines auszuwuchtenden Rotors, beispielsweise eines Fahrzeugrades (11), in eine Auswerteeinrichtung (8) einer Auswuchtmaschine, bei der der auszuwuchtende Rotor auf eine Hauptwelle (1) aufgespannt wird und die jeweiligen Drehwinkellagen der Hauptwelle mit Hilfe eines Winkelgebers (2,12) in Winkelschritten überwacht und wiedergegeben werden, dadurch gekennzeichnet, daß für das Eingeben der jeweiligen Kenngröße des auszuwuchtenden Rotors die Hauptwelle (1) gedreht wird und das bei der Drehung der Hauptwelle vom Winkelgeber abgegebene Signal zur Änderung des jeweils angezeigten Kenngrößenwertes verwendet wird, und daß die Hauptwelle so lange gedreht wird, bis der gewünschte Kenngrößenwert angezeigt wird.

2. Verfahren nach Anspruch 1, dadurch gekennzeichnet, daß bei stillstehender Hauptwelle der momentan gültige Kenngrößenwert angezeigt wird.

3. Verfahren nach Anspruch 1 oder 2, dadurch gekennzeichnet, daß bei der Einstellung der jeweiligen Kenngrößen von häufig vorkommenden Kenngrößen (Standardkenngrößen), die vorab eingegeben werden, ausgegangen wird.

4. Verfahren nach Anspruch 3, dadurch gekennzeichnet, daß, ausgehend von dem vorab eingegebenen Kenngrößenwert, der gewünschte Kenngrößenwert durch entsprechendes Drehen der Hauptwelle eingestellt wird.

5. Verfahren nach einem der Ansprüche 1 bis 4, dadurch gekennzeichnet, daß der vorab eingegebene Kenngrößenwert durch Tastendruck zur Anzeige gebracht wird.

6. Vorrichtung zum Eingeben von Kenngrößen eines auszuwuchtenden Rotors, insbesondere Fahrzeugrades (11), in einer Auswuchtmaschine, mit einer Hauptwelle (1), auf die der auszuwuchtende Rotor aufspannbar ist, und mit einem mit der Hauptwelle verbundenen Winkelgeber (2,12), der die jeweilige Drehwinkellage der Hauptwelle überwacht, zur Durchführung eines Verfahrens nach einem der Ansprüche 1 bis 4, dadurch gekennzeichnet, daß an den Winkelgeber (2) eine Umschalteinrichtung (3) angeschlossen ist, welche den Ausgang des Winkelgebers (2) wahlweise an eine Drehwinkelauswerteeinrichtung (4) oder eine Kenngrößenauswerteeinrichtung (5, 6, 7) anschließt, und daß die Kenngrößenauswerteeinrichtung (5, 6, 7) eine auf die jeweilige Kenngröße (A, B, D) einstellbare Zählereinrichtung (5), die über die Umschalteinrichtung (3) mit dem Ausgang des Winkelgebers (2) verbindbar ist, sowie eine mit der Zählereinrichtung (5) verbundene Kenngrößenanzeigeeinrichtung (6) aufweist.

7. Vorrichtung nach Anspruch 6, dadurch gekennzeichnet, daß die Kenngrößenanzeigeeinrichtung (6) in die Anzeigeeinrichtung für die Unwuchtmeßwerte integriert ist.

8. Vorrichtung nach Anspruch 6 oder 7, dadurch gekennzeichnet, daß die Zählereinrichtung (5) als Vorwärts-Rückwärts-Zähler ausgebildet ist.

9. Vorrichtung nach einem der Ansprüche 6 bis 8, dadurch gekennzeichnet, daß der Zählereinrichtung (5) eine Dividierschaltung (7) vorgeschaltet ist.

10. Vorrichtung nach einem der Ansprüche 6 bis 9, dadurch gekennzeichnet, daß die Zunahme oder Abnahme des angezeigten Kenngrößenwertes durch die Drehrichtung der Hauptwelle (1) bestimmt ist.

11. Vorrichtung nach Anspruch 6, dadurch gekennzeichnet, daß für jede Kenngröße (A, B, D) Anfangs- und Endwerte festgelegt sind.

## Claims

1. A process for the input of parameters of a rotary member to be balanced, for example a vehicle wheel (11), into an evaluation means (8) of a balancing machine, in which the rotary member to be balanced is clamped on to a main shaft (1) and the respective rotary angular positions of the main shaft are monitored in angular steps by means of an angle sensor (2, 12) and reproduced, characterised in that for input of the respective parameter of the rotary member to be balanced the main shaft (1) is rotated and the signal outputted by the angle sensor upon the rotary movement of the main shaft is used to alter the respectively displayed value of the parameter, and that the main shaft is rotated until the desired value of the parameter is displayed.

2. A process according to claim 1 characterised in that, when the main shaft is stationary, the instantaneously applicable value of the parameter is displayed.

3. A process according to claim 1 or claim 2 characterised in that, when setting the respective parameters the starting point taken is frequently occurring parameters (standard parameters) which are inputted beforehand.

4. A process according to claim 3 characterised in that, starting from the previously inputted value of the parameter, the desired value of the parameter is set by suitable rotation of the main shaft.

5. A process according to one of claims 1 to 4 characterised in that the previously inputted value of the parameter is displayed by key depression.

6. Apparatus for the input of parameters of a rotary member to be balanced, in particular a vehicle wheel (11), in a balancing machine, comprising a main shaft (1) on which the rotary member to be balanced can be clamped, and an angle sensor (2, 12) which is connected to the main shaft and which monitors the respective angular position of the main shaft, for carrying out a process according to one of claims 1 to 4, characterised in that connected to the angle sensor (2) is a change-over switching device (3) which connects the output of the angle sensor (2) selectively to a rotary angle evaluation device (4) or a parameter evaluation device (5, 6, 7), and that the parameter evaluation device (5, 6, 7) has a counter device (5) which can be set to the respective parameter (A, B, D) and which can be connected to the output of the angle sensor (2) by way of the change-over switching device (3), and a parameter display device (6) connected to the counter device (5).

7. Apparatus according to claim 6 characterised in that the parameter display device (6) is integrated into the display device for the unbalance measurement values.

8. Apparatus according to claim 6 or claim 7 characterised in that the counter device (5) is in the form of an up-down counter.

9. Apparatus according to one of claims 6 to 8 characterised in that a divider circuit (7) is disposed upstream of the counter device (5).

10. Apparatus according to one of claims 6 to 9 characterised in that the increase or decrease in the displayed value of the parameter is determined by the direction of rotation of the main shaft (1).

11. Apparatus according to claim 6 characterised in that initial and terminal values are fixed for each parameter (A, B, D).

## Revendications

1. Procédé pour introduire des grandeurs caractéristiques d'un rotor devant être équilibré, par exemple d'une roue de véhicule (11), dans un dispositif d'évaluation (8) d'une machine d'équilibrage, dans laquelle le rotor devant être équilibré est bloqué sur un arbre principal (1), et les positions angulaires respectives en rotation de l'arbre principal sont contrôlées et reproduites à l'aide d'un capteur angulaire (2,12), selon des pas angulaires, caractérisé par le fait que pour l'introduction de la grandeur caractéristique respective du rotor à équilibrer, on fait tourner l'arbre principal (1) et on utilise le signal délivré par le capteur angulaire lors de la rotation de l'arbre principal pour modifier la valeur respectivement indiquée de la grandeur caractéristique, et qu'on fait tourner l'arbre principal jusqu'à ce que la valeur désirée de la grandeur caractéristique soit indiquée.

2. Procédé suivant la revendication 1, caractérisé par le fait que lorsque l'arbre principal est au repos, la valeur instantanée valable de la grandeur caractéristique est affichée.

3. Procédé suivant la revendication 1 ou 2, caractérisé par le fait que lors du réglage de la grandeur caractéristique respective, on part de grandeurs caractéristiques qui apparaissent fréquemment (grandeurs caractéristiques standards), qui sont introduites au préalable.

4. Procédé suivant la revendication 3, caractérisé par le fait qu'on règle la valeur désirée de la grandeur caractéristique au moyen d'une rotation correspondante de l'arbre principal, à partir de la valeur préalablement introduite de la grandeur caractéristique.

5. Procédé suivant l'une des revendications 1 à 4, caractérisé par le fait qu'on déclenche l'affichage de la valeur préalablement introduite de la grandeur caractéristique, en enfonçant une touche.

6. Dispositif pour introduire des grandeurs caractéristiques d'un rotor à équilibrer, notamment d'une roue de véhicule (11), dans une machine d'équilibrage, comportant un arbre principal (1), sur lequel le rotor à équilibrer peut être serré, et un capteur angulaire (2,12), qui est raccordé à l'arbre principal et contrôle la position angulaire respective en rotation de l'arbre principal, pour la mise en oeuvre d'un procédé suivant l'une des revendications 1 à 4, caractérisé par le fait qu'au capteur angulaire (2) est raccordé un dispositif de commutation (3), qui raccorde au choix la sortie du capteur angulaire (2) à un dispositif (4) d'évaluation de l'angle de rotation ou à un dispositif (5,6,7) d'évaluation de la grandeur caractéristique, et que le dispositif (5,6,7) d'évaluation de la grandeur caractéristique comporte un dispositif de comptage (5), qui est réglable sur la grandeur caractéristique respective (A,B,D) et peut être raccordé par l'intermédiaire du dispositif de commutation (3), à la sortie du capteur angulaire (2), ainsi qu'un dispositif (6) d'affichage de la grandeur caractéristique, qui est raccordé au dispositif de comptage (5).

7. Dispositif suivant la revendication 6, caractérisé par le fait que le dispositif (6) d'affichage de la grandeur caractéristique est intégré dans le dispositif d'affichage pour les valeurs de mesure du balourd.

8. Dispositif suivant la revendication 6 ou 7, caractérisé par le fait que le dispositif de comptage (5) est réalisé sous la forme d'un compteur progressif-régressif.

9. Dispositif suivant l'une des revendications 6 à 8, caractérisé par le fait qu'un circuit diviseur (7) est branché en amont du dispositif de comptage (5).

10. Dispositif suivant l'une des revendications 6 à 9, caractérisé par le fait que l'accroissement ou la réduction de la valeur affichée de la grandeur caractéristique est déterminé par le sens de rotation de l'arbre principal (1).

11. Dispositif suivant la revendication 6, caractérisé par le fait que des valeurs initiale et finale sont fixées pour chaque grandeur caractéristique (A,B,D).
